# EUROPEAN PATENT APPLICATION

(11) **EP 4 633 118 A1**
(43) Date of publication of application: **15.10.2025**
(21) Application number: 23900093.8
(22) Date of filing: 08.12.2023
(51) Int. Cl.: H04L 67/63

(54) **CONSTANT BIT RATE SERVICE BEARING METHOD AND APPARATUS, ELECTRONIC DEVICE, AND STORAGE MEDIUM**

(30) Priority: 09.12.2022 CN 202211585294
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100032 (CN)
(74) Representative: Maiwald GmbH
(86) International application number: PCT/CN2023/137469
(87) International publication number: WO 2024/120525

(57) **Abstract**

Disclosed in embodiments of the present disclosure are a constant bit rate (CBR) service bearing method and apparatus, an electronic device, and a storage medium. The method comprises: in a metropolitan transmission network channel, transmitting a frame container which bears a CBR service and has a fixed frame length, wherein the frame container comprises a S0 code block, a data code block, i.e., a D code block, and a T code block; the frame container is used for loading multiple paths of CBR service data; and the multiple paths of CBR service data are mapped, by interleaving according to a fixed byte length, to an area where service payload is placed in the frame container.

## Description

### CROSS-REFERENCE TO RELATED APPLICATIONS

This application claims the benefit of priority to Chinese Patent Application No. 202211585294.X, filed on December 9, 2022, the entire contents of which are incorporated herein by reference for all purposes.

### TECHNICAL FIELD

Embodiments of the disclosure relate to the field of electronic communication technology, and in particular to a carrying method and a carrying apparatus for a constant bit rate (CBR) service, an electronic device, and a storage medium.

### BACKGROUND

As a novel transmission network technology architecture, a Metro Transport Network (MTN) is capable of realizing effective integration of time division multiplexing (TDM) technology and packet switching. The MTN includes a MTN section layer and a MTN path layer. The MTN section layer supports port binding and is compatible with protocol stacks of Ethernet physical layer and standard Ethernet optical modules; The MTN path layer supports TDM switching based on a 66B block, possesses a comprehensive end-to-end operation and maintenance management mechanism, and supports cross-multiplexing of any Nx5G channelized customer signals. With service development, the MTN is also developing a TDM path with a small granularity, such as a path with the granularity of 10Mbps .

However, constant bit rate (CBR) services such as E1 are bitstream encoding, and the MTN adopts a 64/66B block bitstream consistent with the Ethernet physical layer. Thus, the CBR bitstream cannot be directly populated into the MTN path. In addition, there is a bandwidth gap between the CBR services such as E1 and the MTN path. E1 is 2 Mbps bandwidth, and the minimum slicing path granularity of the MTN is 10 Mbps. If multiple CBR signals are carried in one MTN path with different frame formats, the implementation is complicated. Further, the performance such as delay is not consistent across different paths, leading to poor carrying efficiency.

### SUMMARY

In order to at least partially solve the above problems, embodiments of the disclosure provide a carrying method and a carrying apparatus for a constant bit rate (CBR) service, an electronic device, and a storage medium.

The technical solutions of the embodiments of the disclosure are realized in the following method.

Embodiments of the disclosure provide a carrying method for a CBR service. The method includes: transmitting, in a Metro Transport Network (MTN) path, a frame container with a fixed frame length for carrying CBR signals; in which the frame container includes an S0 block, a data (D) block, and a T block, the frame container is configured to carry multiple CBR signals, and the multiple CBR signals are mapped into an area where a payload is placed in the frame container with interleaving based on a fixed byte length.

In the above method, the area where the payload is placed includes at least one of: an area where the payload is placed in the D block, or an area where the payload is placed in the T block.

In the above method, the fixed byte length is one byte.

In the above method, the frame container includes frame overhead.

In the above method, the frame overhead carries an empty container indication; and the empty container indication indicates whether each of the CBR signals is carried in the frame container .

In the above method, the empty container indication includes a plurality of first bits, in which one of the first bits indicates whether one of the multiple CBR signals is carried in the frame container; or the empty container indication includes a second bit, in which the second bit in the frame container and a frame container number jointly indicate whether one of the multiple CBR signals is carried in the frame container.

In the above method, in a case that the frame container does not carry a first CBR signal, in the area where the payload is placed, bytes configured to carry the first CBR signal are padded with a fixed value; and the first CBR signal is any one of the multiple CBR signals.

In the above method, in the area where the payload is placed, bytes configured to carry different CBR signals are respectively provided with a negative adjustment opportunity byte, the negative adjustment opportunity byte is used for adaption to a deviation between a data flow reception rate and a container transmission rate.

In the above method, the frame overhead carries a negative adjustment indication; and the negative adjustment indication indicates whether a negative adjustment opportunity byte in the frame container carries the CBR signal.

In the above method, the negative adjustment indication includes a plurality of third bits or a fourth bit. One of the third bits indicates whether the negative adjustment opportunity byte provided in bytes (which are configured to carry one of the multiple CBR signals) carries the CBR signal. The fourth bit in the frame container and a frame container number jointly indicate whether the negative adjustment opportunity byte provided in the bytes (which are configured to carry one of the multiple CBR signals) carries the CBR signal.

In the above method, the frame overhead carries a client signal fail indication; and the client signal fail indication indicates whether a state of a CBR client port is normal, in which the CBR client port is used to provide each of the multiple CBR signals.

In the above method, the client signal fail indication includes a plurality of fifth bits or a sixth bit. One of the fifth bits indicates whether the state of the CBR client port is normal, where the CBR client port is used to provide each of the multiple CBR signals. The sixth bit in the frame container and a frame container number jointly indicate whether the state of the CBR client port is normal, and the CBR client port is used to provide each of the multiple CBR signals.

In the above method, the frame overhead carries clock frequency information; and the clock frequency information includes timestamps of each of the multiple CBR signals.

Embodiments of the disclosure provide a carrying apparatus for a CBR service. The apparatus includes: a transmitting module, configured to transmit, in an MTN path, a frame container with a fixed frame length for carrying CBR signals; in which the frame container includes an S0 block, a D block, and a T block, the frame container is configured to carry multiple CBR signals, and the multiple CBR signals are mapped into an area where a payload is placed in the frame container with interleaving based on a fixed byte length.

Embodiments of the disclosure provide an electronic device. The electronic device includes: a processor, a memory, and a communication bus; in which the communication bus is configured to implement a communication connection between the processor and the memory; and the processor is configured to execute one or more computer programs stored in the memory to implement the carrying method for a CBR service described above.

Embodiments of the disclosure provide a computer-readable storage medium having stored a computer program, which, when executed by a processor, implements the carrying method for a CBR service described above.

Embodiments of the disclosure provide a carrying method and a carrying apparatus for a CBR service, an electronic device, and a storage medium. The method includes: transmitting, in the MTN path, the frame container with the fixed frame length for carrying CBR signals; in which the frame container includes the S0 block, the D block, and the T block, the frame container carries multiple CBR signals, and the multiple CBR signals are mapped into the area where the payload is placed in the frame container with interleaving based on the fixed byte length. The technical solution provided in embodiments of the disclosure may effectively solve an adaptation between bitstream encoding and a 64/66B block stream, and may realize a unified frame format when carrying the multiple CBR signals. This maintains a consistent delay performance, realizes a bandwidth adaptation, and ensures a carrying efficiency.

### BRIEF DESCRIPTION OF THE DRAWINGS

FIG. 1 is a flow chart illustrating a carrying method for a constant bit rate (CBR) service provided in embodiments of the disclosure.
FIG. 2 is a schematic diagram illustrating an exemplary frame container provided in embodiments of the disclosure.
FIG. 3 is a structural block diagram illustrating a carrying apparatus for a CBR service provided in embodiments of the disclosure.
FIG. 4 is a structural block diagram illustrating an electronic device provided in embodiments of the disclosure.

### DETAILED DESCRIPTION

In order to make the purpose, technical solutions and advantages of the disclosure clearer and more understandable, the disclosure is described below in conjunction with the accompanying figures and embodiments. It should be understood that the specific embodiments described herein are only used to illustrate the disclosure, but are not intended to limit the disclosure.

The technical solutions of the disclosure and how the technical solutions of the disclosure solve the above technical problems are described below in detail via embodiments and in conjunction with the accompanying figures. The following embodiments may be combined with each other, and the same or similar concepts or processes may not be repeated in some embodiments.

In addition, the technical solutions described in embodiments of the disclosure may be arbitrarily combined without conflict.

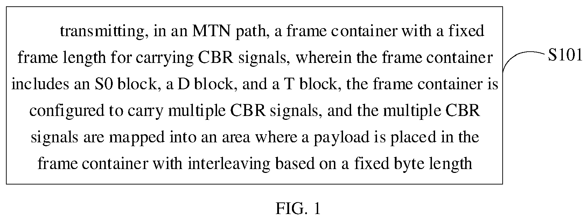

Embodiments of the disclosure provide a carrying method for a constant bit rate (CBR) service. The method is realized via a carrying apparatus for a CBR service. The apparatus may be an electronic device such as a cell phone, a tablet computer, etc., which are not limited in the embodiments of the disclosure. FIG. 1 is a flow chart illustrating a carrying method for a CBR service provided in embodiments of the disclosure. As shown in FIG. 1, in an embodiment of the disclosure, the carrying method for a CBR service mainly includes the following step S101.

At S101, a frame container with a fixed frame length for carrying CBR signals is transmitted in a Metro Transport Network (MTN) path; in which the frame container includes an S0 block, a data (D) block, and a T block, the frame container carries multiple CBR signals, and the multiple CBR signals are mapped into an area where a payload is placed in the frame container with interleaving based on a fixed byte length.

In an embodiment of the disclosure, the carrying apparatus for a CBR service may transmit, in the MTN path, the frame container with the fixed frame length for carrying CBR signals (i.e., signals or data for the CBR service). There may be a plurality of frame containers transmitted in the MTN path. For example, one frame container is transmitted at every interval of the fixed length. A specific number of frame containers and the fixed frame length of the frame container are not limited in the embodiments of the disclosure.

In an embodiment of the disclosure, the frame container has a uniformly fixed frame structure. The frame container includes the S0 block, the D block, and the T block. The frame container includes the area where the payload (i.e., payload for the CBR service) is placed. The area where the payload is placed includes at least one of: an area where the payload is placed in the D block, or an area where the payload is placed in the T block.

It should be noted that in an embodiment of the disclosure, the frame container may carry multiple CBR client signals. The quantity/amount of data or signals for the CBR service actually carried in the frame container may be set based on actual requirements and application scenarios. For example, the frame container may carry four CBR client signals. In practical applications, one frame container may actually carry three CBR client signals, and another frame container may actually carry four CBR client signals. The embodiments of the disclosure are not limited herein.

It should be noted that in an embodiment of the disclosure, the multiple CBR signals are mapped into the area where the payload is placed in the frame container with interleaving based on the fixed byte length when the multiple CBR signals are carried in the frame container. The fixed byte length may be one byte, i.e., the multiple CBR signals are mapped into the area where the payload is placed into the frame container with interleaving based on a single byte. Further, the fixed byte length may be other byte lengths. The byte length used when the multiple CBR signals are mapped in each frame container with interleaving is uniform. The specific fixed byte length is not limited in embodiments of the disclosure.

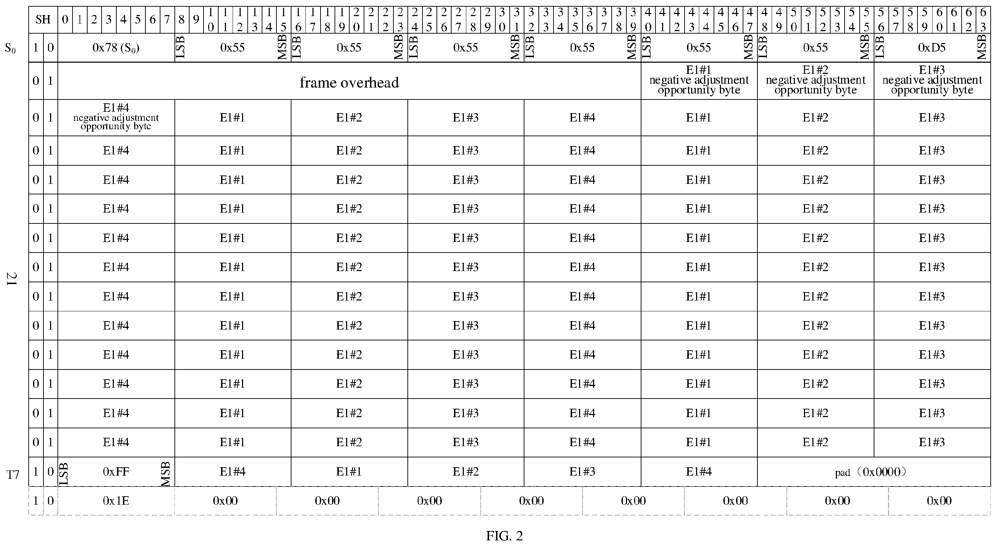

FIG. 2 is a schematic diagram illustrating an exemplary frame container provided in embodiments of the disclosure. As shown in FIG. 2, the four CBR signals are mapped with interleaving based on a single byte. A first CBR signal E1#1 is padded with one byte. A second CBR signal E1#2 is padded with one byte. A third CBR signal E1#3 is padded with one byte. A fourth CBR signal E1#4 is padded with one byte. The fourth CBR signals are padded sequentially in an area where a payload is placed with interleaving.

In an embodiment of the disclosure, the frame container includes frame overhead. As shown in FIG. 2, the frame container starts with an S0 block, followed by the frame overhead, an area where a payload is placed, and a T block. The T block may be a block with a data padding area such as T7, and an area where a payload is placed in the T block belongs to the area where the payload is placed in the entire frame container.

In an embodiment of the disclosure, the frame overhead carries an empty container indication. The empty container indication indicates whether the frame container carries each of the multiple CBR signals.

In embodiments of the disclosure, referring to FIG. 2, the frame container may carry the fourth CBR signals. The frame overhead carries the empty container indication. The empty container indication indicates whether the frame container actually carries the fourth CBR signals.

In an embodiment of the disclosure, the empty container indication includes a plurality of first bits, in which one of the first bits indicates whether one of the multiple CBR signals is carried in the frame container; or the empty container indication includes a second bit, in which the second bit in the frame container and a frame container number jointly indicate whether one CBR signal is carried in the frame container.

For example, in an embodiment of the disclosure, the frame container may carry the fourth CBR signals. In the frame overhead, different first bits respectively indicate whether the frame container carries the first CBR signal, the second CBR signal, the third CBR signal and the fourth CBR signal. For example, if the first one of the first bits is 0, it indicates that in the area where the payload is placed, bytes configured to carry the first CBR signal carry the first CBR signal, i.e., the frame container carries the first CBR signal. If the first one of the first bits is 1, it indicates that in the area where the payload is placed, bytes configured to carry the first CBR signal do not carry the first CBR signal, i.e., the frame container does not carry the first CBR signal.

For example, in an embodiment of the disclosure, the frame container may carry the fourth CBR signals. In the frame overhead, the second bit and different frame container numbers jointly indicate a loading situation of the fourth CBR signals. For example, the value of the second bit in the frame overhead with a frame container number of 1 indicates that, in the area where the payload is placed, whether bytes configured to carry the first CBR signal carry the first CBR signal. The value of the second bit in the frame overhead with a frame container number of 2 indicates that, in the area where the payload is placed, whether bytes configured to carry the second CBR signal carry the second CBR signal. The value of the second bit in the frame overhead with a frame container number of 3 indicates that, in the area where the payload is placed, whether bytes configured to carry the third CBR signal carry the third CBR signal. The value of the second bit in the frame overhead with a frame container number of 4 indicates that, in the area where the payload is placed, whether bytes configured to carry the fourth CBR signal carry the fourth CBR signal.

It should be noted that in an embodiment of the disclosure, in the manner that the second bit and the frame container number are used to jointly indicate whether the CBR signal is carried, different frame container numbers may used together with the second bit to jointly indicate whether the one of the multiple CBR signals is carried . For example, all second bits in the frame overhead with the frame container numbers of 1, 5, and 9 indicate whether the first CBR signal is carried.

In an embodiment of the disclosure, in a case that the frame container does not carry the first CBR signal, in the area where the payload is placed, bytes configured to carry the first CBR signal are padded with a fixed value. The first CBR signal is any one of the multiple CBR signals.

For example, in an embodiment of the disclosure, the frame container may carry the four CBR signals. When the frame container does not carry some CBR signals among the first CBR signal, the second CBR signal, the third CBR signal, and the fourth CBR signal, in the area where the payload is placed in the frame container, bytes configured to carry, but not carry one CBR signal may be padded with the fixed value. For example, the bytes are padded with the fixed value 1.

In an embodiment of the disclosure, in the area where the payload is placed, bytes configured to carry different CBR signals are respectively provided with a negative adjustment opportunity byte. The negative adjustment opportunity byte is used for adaption to a deviation between a data flow reception rate and a container transmission rate.

For example, in an embodiment of the disclosure, the frame container may carry the four CBR signals. In the area where the payload is placed in the frame container, bytes configured to carry the first CBR signal are provided with a negative adjustment opportunity byte in a fixed position, bytes configured to carry the second CBR signal are provided with a negative adjustment opportunity byte in a fixed position, bytes configured to carry the third CBR signal are provided with a negative adjustment opportunity byte in a fixed position, and bytes configured to carry the fourth CBR signal are provided with a negative adjustment opportunity byte in a fixed position. These negative adjustment opportunity bytes are used for rate adaption to deviations between data flow reception rates of the four CBR signals and container transmission rates. For example, referring to FIG. 2, a first byte in the bytes configured to carry the first CBR signal is provided with a negative adjustment opportunity byte, a first byte in the bytes configured to carry the second CBR signal is provided with a negative adjustment opportunity byte, a first byte in the bytes configured to carry the third CBR signal is provided with a negative adjustment opportunity byte, and a first byte in the bytes configured to carry the fourth CBR signal is provided with a negative adjustment opportunity byte. If a data flow reception rate of the first CBR signal results in a need for slower transmission, the first byte of the bytes configured to carry the first CBR signal, i.e., the negative adjustment opportunity byte, will be not padded with the first CBR signal, but may be padded with some other value, e.g., 0.

In an embodiment of the disclosure, the frame overhead carries a negative adjustment indication. The negative adjustment indication indicates whether a negative adjustment opportunity byte in the frame container carries the CBR signal.

It should be noted that in an embodiment of the disclosure, in the area where the payload is placed, each byte configured to carry different CBR signals is provided with each negative adjustment opportunity byte. The frame overhead carries a negative adjustment byte usage indication, which indicates that in the area where the payload is placed, whether each negative adjustment opportunity byte provided in each byte carries the CBR signal, where each byte is configured to carry different CBR signals.

In an embodiment of the disclosure, the negative adjustment indication includes a plurality of third bits, in which one of the third bits indicates whether the negative adjustment opportunity byte provided in bytes carries the CBR signal, and the bytes are configured to carry one of the multiple CBR signals. Or, the negative adjustment indication includes a fourth bit, in which the fourth bit in the frame container and a frame container number jointly indicate whether the negative adjustment opportunity byte provided in the bytes carries the CBR signal, and the bytes are configured to carry one of the multiple CBR signals.

For example, in an embodiment of the disclosure, the frame container may carry four CBR signals. In the frame overhead, different third bits indicate whether each negative adjustment opportunity byte provided in the bytes (which are configured to carry the first CBR signal, the second CBR signal, the third CBR signal, and the fourth CBR signal) carries the CBR signal. For example, the first one of the third bits indicates whether the negative adjustment opportunity byte provided in the bytes (which are configured to carry the first CBR signal) carries the CBR signal. In the case that the first one of the third bits is 0, it indicates that the negative adjustment opportunity byte provided in the bytes (which are configured to carry the first CBR signal) carries the CBR signal. In the case that the first one of the third bits is 1, it indicates that the negative adjustment opportunity byte provided in the bytes (which are configured to carry the first CBR signal) does not carry the CBR signal. In this case, the negative adjustment opportunity byte may be padded with the fixed value, e.g., 0, that is, the negative adjustment opportunity byte is used for adaption to a deviation between a data flow reception rate of the first CBR signal and the container transmission rate.

For example, in an embodiment of the disclosure, the frame container may carry four CBR signals. In the frame overhead, the fourth bit and different frame container numbers jointly indicate, in the area where the payload is placed, a usage of each negative adjustment opportunity byte provided in the bytes (which are configured to carry each CBR signal). For example, in the frame overhead with a frame container number of 1, the value of the fourth bit indicates that whether the negative adjustment opportunity byte provided in the bytes (which are configured to carry the first CBR signal) carries the CBR signal. In the frame overhead with a frame container number of 2, the value of the fourth bit indicates that whether the negative adjustment opportunity byte provided in the bytes (which are configured to carry the second CBR signal) carries the CBR signal. In the frame overhead with a frame container number of 3, the value of the fourth bit indicates that whether the negative adjustment opportunity byte provided in the bytes (which are configured to carry the third CBR signal) carries the CBR signal. In the frame overhead with a frame container number of 4, the value of the fourth bit indicates that whether the negative adjustment opportunity byte provided in the bytes (which are configured to carry the fourth CBR signal) carries the CBR signal.

It should be noted that in an embodiment of the disclosure, in the manner that the fourth bit and the frame container number jointly indicates whether the negative adjustment opportunity byte carries the CBR signal, the fourth bit and different frame container numbers may jointly indicate whether the negative adjustment opportunity byte provided in the bytes (which are configured to carry one of the multiple CBR signals) carries the CBR signal. For example, in the frame overhead with the frame container numbers of 1, 5, and 9, the fourth bits all indicate whether the negative adjustment opportunity byte provided in the bytes (which are configured to carry the first CBR signal) carries the CBR signal.

In an embodiment of the disclosure, the frame overhead carries a client signal fail indication. The client signal fail indication indicates whether a state of a CBR client port is normal, in which the CBR client port is used to provide each of the multiple CBR signals.

For example, in an embodiment of the disclosure, the frame container may carry four CBR signals. The frame overhead carries the client signal fail indication. The client signal fail indication indicates whether the state of the CBR client port is normal, in which the CBR client port is used to provide the first CBR signal, the second CBR signal, the third CBR signal, or the fourth CBR signal among the four CBR signals.

In an embodiment of the disclosure, the client signal fail indication includes a plurality of fifth bits or a sixth bit. One of the fifth bits indicates whether the state of the CBR client port is normal, where the CBR client port is used to provide one of the multiple CBR signals. The sixth bit in the frame container and a frame container number jointly indicate whether the state of the CBR client port is normal, where the CBR client port is used to provide one of the multiple CBR signals.

It should be noted that in an embodiment of the disclosure, similar to the empty container indication and the negative adjustment indication described above, the client signal fail indication may include the plurality of fifth bits or the sixth bit.

For example, the client signal fail indication indicates whether client port states for 4 paths of E1 services are normal. For example, when a value of the client signal fail indication is 0, the corresponding client port state is normal. When the value of the client signal fail indication is 1, the client port state is failed, and E1 payload for that path is set to 1. In this case, the failure situation of E1 client signals at the transmitter side may be transmitted to the opposite side.

For example, in an embodiment of the disclosure, the frame container may carry four CBR signals. In the frame overhead, different fifth bits indicate whether the state of each CBR client port is normal, where each CBR client port is used to provide each of the first CBR signal, the second CBR signal, the third CBR signal, and the fourth CBR signal. For example, a first one of the fifth bits indicates whether the state of the CBR client port used to provide the first CBR signal is normal. In the case that the first one of the fifth bits is 0, it indicates that the state of the CBR client port used to provide the first CBR signal is normal. In the case that the first one of the fifth bits is 1, it indicates that the state of the CBR client port used to provide the first CBR signal is failed.

For example, in an embodiment of the disclosure, the frame container may carry four CBR signals. In the frame overhead, the sixth bit and different frame container numbers jointly indicate whether the state of each CBR client port is normal, where each CBR client port is used to provide each of the multiple CBR signals. For example, in the frame overhead with a frame container number of 1, the value of the sixth bit indicates whether the state of the CBR client port used to provide the first CBR signal is normal. In the frame overhead with a frame container number of 2, the value of the sixth bit indicates whether the state of the CBR client port used to provide the second CBR signal is normal. In the frame overhead with a frame container number of 3, the value of the sixth bit indicates whether the state of the CBR client port used to provide the third CBR signal is normal. In the frame overhead with a frame container number of 4, the value of the sixth bit indicates whether the state of the CBR client port used to provide the fourth CBR signal is normal.

In an embodiment of the disclosure, the frame overhead carries clock frequency information. The clock frequency information includes timestamps of each of the multiple CBR signals.

It needs to be noted that, in an embodiment of the disclosure, the frame container may carry multiple CBR signals. Timestamps of the multiple CBR signals may be carried in frame overheads of different frame containers respectively. A timestamp field segment and a frame container number may jointly indicate a complete timestamp of a particular CBR signal. For example, several segments of the timestamps of certain container frame numbers are combined to form a timestamp of the first CBR signal, and several segments of the timestamps of certain other container frame numbers are combined to form a timestamp of the second CBR signal. In addition, the timestamp may be carried periodically with the transmission of the frame containers. Embodiments of the disclosure are not limited herein.

Embodiments of the disclosure provide a carrying method for a CBR service. The method includes: transmitting, in the MTN path, the frame container with the fixed frame length for carrying the CBR service; in which the frame container includes the S0 block, the D block, and the T block, the frame container is configured to carry multiple CBR signals, and the multiple CBR signals are mapped into the area where the payload is placed in the frame container with interleaving based on the fixed byte length. The technical solution provided in embodiments of the disclosure may effectively solve an adaptation between bitstream encoding and a 64/66B block stream, and may realize a unified frame format when loading the multiple CBR signals. This maintains a consistent delay performance, realizes a bandwidth adaptation, and ensures a carrying efficiency.

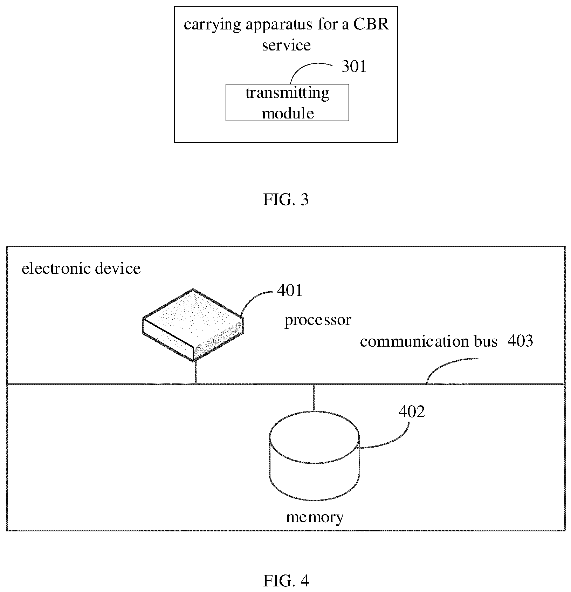

FIG. 3 is a structural block diagram illustrating a carrying apparatus for a CBR service provided in embodiments of the disclosure. As shown in FIG. 3, the carrying apparatus for a CBR service includes a transmitting module 301.

The transmitting module 301 is configured to transmit, in an MTN path, a frame container with a fixed frame length for carrying the CBR service; in which the frame container includes an S0 block, a D block, and a T block, the frame container is configured to carry multiple CBR signals, and the multiple CBR signals are mapped into an area where a payload is placed in the frame container with interleaving based on a fixed byte length.

In an embodiment of the disclosure, the area where the payload is placed includes at least one of: an area where the payload is placed in the D block, or an area where the payload is placed in the T block.

In an embodiment of the disclosure, the fixed byte length is one byte.

In an embodiment of the disclosure, the frame container includes frame overhead.

In an embodiment of the disclosure, the frame overhead carries an empty container indication; and the empty container indication indicates whether each of the multiple CBR signals is carried in the frame container.

In an embodiment of the disclosure, the empty container indication includes a plurality of first bits or a second bit. One of the first bits indicates whether one of the multiple CBR signals is carried in the frame container. The second bit in the frame container and a frame container number jointly indicate whether one of the multiple CBR signals is carried in the frame container.

In an embodiment of the disclosure, in a case that the frame container does not carry a first CBR signal, in the area where the payload is placed, bytes configured to carry the first CBR signal are padded with a fixed value; and the first CBR signal is any one of the multiple CBR signals.

In an embodiment of the disclosure, in the area where the payload is placed, bytes configured to carry different CBR signals are respectively provided with a negative adjustment opportunity byte, the negative adjustment opportunity byte is used for rate adaption to a deviation between a data flow reception rate and a container transmission rate.

In an embodiment of the disclosure, the frame overhead carries a negative adjustment indication; and the negative adjustment indication indicates whether a negative adjustment opportunity byte in the frame container carries the CBR signal.

In an embodiment of the disclosure, the negative adjustment indication includes a plurality of third bits or a fourth bit. One of the third bits indicates whether the negative adjustment opportunity byte provided in bytes carries the CBR signal, and the bytes are configured to carry one of the multiple CBR signals. The fourth bit in the frame container and a frame container number jointly indicate whether the negative adjustment opportunity byte provided in the bytes carries the CBR signal, and the bytes are configured to carry one of the multiple CBR signals.

In an embodiment of the disclosure, the frame overhead carries a client signal fail indication; and the client signal fail indication indicates whether a state of a CBR client port is normal, in which the CBR client port is used to provide each of the multiple CBR signals.

In an embodiment of the disclosure, the client signal fail indication includes a plurality of fifth bits or a sixth bit. One of the fifth bits indicates whether the state of the CBR client port is normal, and the CBR client port is used to provide one of the multiple CBR signals. The sixth bit in the frame container and a frame container number jointly indicate whether the state of the CBR client port is normal, and the CBR client port is used to provide the one of the multiple CBR signals.

In an embodiment of the disclosure, the frame overhead carries clock frequency information; and the clock frequency information includes timestamps of each of the multiple CBR signals.

Embodiments of the disclosure further provide an electronic device. FIG. 4 is a structural block diagram illustrating an electronic device provided in embodiments of the disclosure. As shown in FIG. 4, in embodiments of the disclosure, the electronic device includes: a processor 401, a memory 402, and a communication bus 403.

The communication bus 403 is configured to implement a communication connection between the processor 401 and the memory 402.

The processor 401 is configured to execute one or more computer programs stored in the memory 402 to implement the carrying method for a CBR service described above.

Embodiments of the disclosure provide a computer-readable storage medium having stored a computer program, which, when executed by a processor, implements the carrying method for a CBR service described above. The computer-readable storage medium may be a volatile memory, such as a random-access memory (RAM). Alternatively, the computer-readable storage medium may be a non-volatile memory, such as a read-only memory (ROM), a flash memory, a hard disk drive (HDD), or a solid-state drive (SSD). Alternatively, the computer-readable storage medium may be any of the above memories or a combination of the above memories, such as a cell phone, a computer, a tablet device, a personal digital assistant, or the like.

Those skilled in the art should understand that the embodiments of the disclosure may be provided as a method, a system, or a computer program product. Thus, the disclosure may take the form of a hardware embodiment, a software embodiment, or embodiments incorporating both software and hardware aspects. Moreover, the disclosure may take the form of a computer program product implemented on one or more computer-readable storage media (including but not limited to a disk memory, CD-ROMs, and an optical memory, etc.), including computer-usable program code(s).

The disclosure is described according to a flow chart and/or a block diagram for implementing a method, a device (system), and a computer program product according to the embodiments of the disclosure. It should be understood that each process and/or block in the flow chart and/or a block diagram, and a combination of a process and/or block in the flow chart and/or a block diagram may be implemented by computer program instructions. These computer program instructions may be provided to a processor of a general purpose computer, a special purpose computer, an embedded processor, or other programmable data processing device to generate a machine, such that when instructions are executed by the processor of the computer or other programmable data processing device, an apparatus for implementing a function specified in one or more processes in the flow chart and/or one or more blocks in the block diagram is generated.

These computer program instructions may also be stored in a computer-readable memory that may direct a computer or other programmable data processing device to work in a particular manner such that the instructions stored in the computer-readable memory generate a product that includes an instruction apparatus. The instruction apparatus implements a function specified in one or more processes in the flow chart and/or one or more blocks in the block diagram.

These computer program instructions may also be loaded to a computer or other programmable data processing device such that a series of operational steps are performed on a computer or other programmable device to generate a computer-implemented process, such that instructions running on a computer or other programmable device provide implementation steps of the function(s) specified in one or more processes in the flow chart and/or one or more blocks in the block diagram.

The above is merely a specific implementation of the disclosure, but the scope of protection of the disclosure is not limited thereto, and any person skilled in the art may easily envisage changing or replacing within the technical scope disclosed in the disclosure, which should be covered within the scope of protection of the disclosure. Therefore, the protection scope of the disclosure shall be subject to the protection scope of the claims.

## Claims

1. A carrying method for a constant bit rate (CBR) service, comprising:
transmitting, in a Metro Transport Network (MTN) path, a frame container with a fixed frame length for carrying CBR signals;
wherein the frame container comprises an S0 block, a data (D) block, and a T block, the frame container is configured to carry multiple CBR signals, and the multiple CBR signals are mapped into an area where a payload is placed in the frame container with interleaving based on a fixed byte length.

2. The method according to claim 1, wherein the area where the payload is placed comprises at least one of: an area where the payload is placed in the D block, or an area where the payload is placed in the T block.

3. The method according to claim 1, wherein the fixed byte length is one byte.

4. The method according to claim 1, wherein the frame container comprises frame overhead.

5. The method according to claim 4, wherein the frame overhead carries an empty container indication; and
the empty container indication indicates whether each of the CBR signals is carried in the frame container.

6. The method according to claim 5, wherein the empty container indication comprises:
a plurality of first bits, wherein one of the first bits indicates whether one of the multiple CBR signals is carried in the frame container; or
a second bit, wherein the second bit in the frame container and a frame container number jointly indicate whether one of the multiple CBR signals is carried in the frame container.

7. The method according to claim 1, wherein
in a case that the frame container does not carry a first CBR signal, in the area where the payload is placed, bytes configured to carry the first CBR signal are padded with a fixed value; and
the first CBR signal is any one of the multiple CBR signals.

8. The method according to claim 1, wherein
in the area where the payload is placed, bytes configured to carry different CBR signals are respectively provided with a negative adjustment opportunity byte, the negative adjustment opportunity byte is used for adaption to a deviation between a data flow reception rate and a container transmission rate.

9. The method according to claim 4, wherein the frame overhead carries a negative adjustment indication; and
the negative adjustment indication indicates whether a negative adjustment opportunity byte in the frame container carries the CBR signal.

10. The method according to claim 9, wherein the negative adjustment indication comprises:
a plurality of third bits, wherein one of the third bits indicates whether the negative adjustment opportunity byte provided in bytes carries the CBR signal, and the bytes are configured to carry one of the multiple CBR signals; or
a fourth bit, wherein the fourth bit in the frame container and a frame container number jointly indicate whether the negative adjustment opportunity byte provided in the bytes carries the CBR signal, and the bytes are configured to carry one of the multiple CBR signals.

11. The method according to claim 4, wherein the frame overhead carries a client signal fail indication; and
the client signal fail indication indicates whether a state of a CBR client port is normal, wherein the CBR client port is used to provide each of the multiple CBR signals.

12. The method according to claim 11, wherein the client signal fail indication comprises:
a plurality of fifth bits, wherein one of the fifth bits indicates whether the state of the CBR client port is normal, and the CBR client port is used to provide each of the multiple CBR signals; or
a sixth bit, wherein the sixth bit in the frame container and a frame container number jointly indicate whether the state of the CBR client port is normal, and the CBR client port is used to provide each of the multiple CBR signals.

13. The method according to claim 4, wherein the frame overhead carries clock frequency information; and
the clock frequency information comprises timestamps of each of the multiple CBR signals.

14. A carrying apparatus for a constant bit rate (CBR) service, comprising:
a transmitting module, configured to transmit, in a Metro Transport Network (MTN) path, a frame container with a fixed frame length for carrying CBR signals;
wherein the frame container comprises an S0 block, a data (D) block, and a T block, the frame container is configured to carry multiple CBR signals, and the multiple CBR signals are mapped into an area where a payload is placed in the frame container with interleaving based on a fixed byte length.

15. An electronic device, comprising: a processor, a memory, and a communication bus;
wherein the communication bus is configured to implement a communication connection between the processor and the memory; and
the processor is configured to execute one or more computer programs stored in the memory to implement the carrying method for a CBR service according to any one of claims 1 to 13.

16. A computer-readable storage medium having a computer program stored thereon, which, when executed by a processor, implements the carrying method for a CBR service according to any one of claims 1 to 13.
